(19) Europäisches Patentamt
European Patent Office
Office européen des brevets

(11) EP 1 505 097 A1

(12) EUROPEAN PATENT APPLICATION

(43) Date of publication:
**09.02.2005 Bulletin 2005/06**

(21) Application number: **04017930.1**

(22) Date of filing: **29.07.2004**

(51) Int Cl.[7]: **C08G 63/16**, C08G 63/199, C08L 67/02 // (C08L67/02, 67:04)

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **29.07.2003 JP 2003281908**
**26.08.2003 JP 2003301316**
**28.08.2003 JP 2003304154**
**05.09.2003 JP 2003314227**
**25.09.2003 JP 2003332889**
**25.09.2003 JP 2003332892**

(71) Applicant: **Ube Industries, Ltd.**
**Ube-shi, Yamaguchi-ken 755-8633 (JP)**

(72) Inventors:
- **Okushita, Hiroshi c/o Ube Lab., Corp. Res. & Dev.**
  **Ube-shi Yamaguchi-ken (JP)**
- **Kurachi, Kouichiro**
  **c/o Ube Lab., Corp. Res. & Dev.**
  **Ube-shi Yamaguchi-ken (JP)**
- **Tanaka, Shouichi c/o Ube Lab., Corp. Res. & Dev.**
  **Ube-shi Yamaguchi-ken (JP)**
- **Adachi, Fumio c/o Ube Lab., Corp. Res. & Dev.**
  **Ube-shi Yamaguchi-ken (JP)**
- **Tanaka, Hideho c/o Ube Lab., Corp. Res. & Dev.**
  **Ube-shi Yamaguchi-ken (JP)**
- **Fujiwara, Youtaro**
  **c/o Ube Lab., Corp. Res. & Dev.**
  **Ube-shi Yamaguchi-ken (JP)**
- **Yoshida, Youichi c/o Ube Lab., Corp. Res. & Dev.**
  **Ube-shi Yamaguchi-ken (JP)**

(74) Representative:
**HOEGER, STELLRECHT & PARTNER**
**Patentanwälte**
**Uhlandstrasse 14 c**
**70182 Stuttgart (DE)**

(54) **Polyoxalate resin and shaped articles and resin compositions comprising same**

(57) A biodegradable polyoxalate resin having a high melt-formability by the formula:

$$X \textrm{-}[\textrm{-}O\textrm{-}A\textrm{-}O\textrm{-}CO\textrm{-}CO\textrm{-}]_n\textrm{-} Y$$

in which A = $C_3$-$C_{12}$ divalent aliphatic hydrocarbon group, X = H; R-OCOCO- or OHC- group, Y = -OR, -OAOH or -OAOCHO when X = H-, or -OR or -OAOCHO when X = R-OCOCO- or OHC-, R = $C_1$-$C_4$ alkyl, and is usable in a resinous composition with a poly(lactic acid) resin.

EP 1 505 097 A1

## Description

TECHNICAL FIELD

The present invention relates to a polyoxalate resin and shaped articles and resin compositions comprising the same. More particularly, the present invention relates to a polyoxalate resin comprising a polymer or polymers formed from dialkyl oxalates and aliphatic diols and having a high molecular weight, and shaped articles and resin compositions comprising the same.

BACKGROUND ART

A process for producing a polyoxalate resin by using, a starting compounds, dialkyl oxalates and aliphatic diols is known. Almost of the conventional resultant polyoxalate resins have a relatively low degree of polymerization and thus exhibit unsatisfactory mechanical properties and are not appropriate for practical use.

For example, J. Am. Chem. Soc., 52, 3292 (1930) (non-patent reference 1) discloses a polytrimethylene oxalate produced by reacting diethyl oxalate with trimethylene glycol at an elevated temperature to provide a polyoxalate; and subjecting the polyoxalate to a fractional crystallization to collect a high molecular fraction having an average molecular weight of approximately 2000. Also, it is reported that a polyhexamethylene oxalate having an average molecular weight of approximately 1100 can be obtained from diethyl oxalate and 1,6-hexanediol. The resultant polyoxalate, however, has a relatively low molecular weight and should be referred to as a low molecular weight oligomer rather than a polymer and thus no production and no properties of the shaped articles have been reported. Also, the non-patent reference 1 includes no disclosure of the ratio in amount of the oxalates and the diols.

U.S. Patent No. 2,901,466 (Patent reference 1) discloses a production of polycyclohexylenedimethylene oxalate having a melting point of 205 to 210°C and an intrinsic viscosity of 0.75 by heating 0.02 mole of diethyl oxalate and 0.022 mole of trans-1,4-cyclohexanedimethanol in the presence of titanium tetrabutoxide at a temperature of 180 to 190°C, and then reducing, at a temperature of 220°C, the pressure of the reaction mixture to 1 mmHg (133 Pt). However, in this case, a glycol-eliminating reaction for increasing the molecular weight of the resultant product must be carried out at a high temperature under a high vacuum for a long time. Thus it was not believed that, under the polymerization reaction conditions close to the melting point of the product, the resulting reaction product had a high molecular weight. Also, in this case, in the ratio in molar amount of the dialkyl oxalate to the aliphatic diol, the aliphatic diol was used in a stoichiometrical excessive amount in comparison with that of the dialkyl oxalate.

J. Polym. Sci., Part A, 2, 2115 (1964) (non-patent reference 2) discloses a production of polycyclohexylenedimethylene oxalate having an intrinsic viscosity of 0.77 by subjecting a mixture of diethyl oxalate with trans-1,4-cyclohexane diol in an amount 1.25 moles per mole of the diethyl oxalate to a reaction, to prepare a prepolymer and subjecting the prepolymer to a solid phase polymerization. However, this polyoxalate is not considered to be one having a high molecular weight significantly which was increased under the polymerization temperature below the melting point of the resultant polymer, similarly to that of the patent reference 1. Also, in the non-patent reference, the properties of the shaped articles are not reported. Further, in the reaction of the dialkyl oxalate with the aliphatic diol, the aliphatic diol was employed in an excessive amount in comparison with that of the dialkyl oxalate.

J. Polym. Sci., Polym. Chem. Ed., 28, 1361 (1990) reports production of polytetramethylene oxalate having a degree of polymerization of 9 (an average molecular weight of 1300) by heating a mixture of diethyl oxalate with 1,4-butane diol in the presence of tin dioctylate at a temperature of 90 to 120°C, and then further heating the reaction mixture at a temperature of 135°C under a reduced pressure of 0.1 to 0.5 Torr (13.3 to 66.5 Pa). Also, in this reference, production of polybutyne oxalate having a degree of polymerization of 32 and an average molecular weight of 4500 from diethyl oxalate and 2-butyne-1,4-diol is reported. This resultant polyoxalate is a low molecular weight oligomer rather than a polymer, and no production and no properties of the shaped articles from the polyoxalate were reported. Also, in this case, dialkyl oxalate and the aliphatic diol were used in a molar ratio of 1:1.

Japanese Unexamined Patent Publication No. 2002-145691 (patent reference 2) discloses a production of a polyoxalate (an oxalate oligomer) having a number average molecular weight in the range of from 1500 to 15000, provided with two terminal hydroxyl groups and exhibiting an excellent biodegradability, by a reaction of oxalic acid or a reactive derivative of oxalic acid, particularly dimethyl oxalate with an aliphatic diol having 2 to 12 carbon atoms, particularly 1,6-hexane diol. The resultant polyoxalate, however, had a relatively low molecular weight to such an extent that the resultant polyoxalate could not be melt-processed or was very difficult to be melt-processed and had a very low mechanical strength. Also, in the reaction, the aliphatic diol was employed in an excessive amount of the aliphatic diol (glycol component) in comparison to that of the dialkyl oxalate (acid component).

Currently a polyoxalate which is assumed to have a high molecular weight is known. However, a concrete process for producing the high molecular weight polyoxalate is not practically known. Even when a high molecular weight polyoxalate is practically obtained, the resultant polymer is not one produced by a polymerization of a dialkyl

oxalate and an aliphatic diol. usually, the polymer is produced by a polycondensation of oxalic acid with an aliphatic diol or by a ring-opening polymerization reaction of a cyclic oxalate monomer, and thus is difficult to form a shaped article, having a satisfactory performance, by a conventional melt-processing method, and/or is formed into very brittle shaped articles due to a substantial influence of carboxyl groups located in the terminals of the polymer molecules and causing a spontaneous decomposition of the polymer.

For example, Japanese Unexamined Patent Publication No. 8-48756 (patent reference 3) discloses a high molecular weight aliphatic polyester having a number average molecular weight or more than 70,000 but not more than 1,000,000. The dicarboxylic acids (or esters or acid anhydrides thereof) usable, as starting materials, for the polyester include oxalic acid. In the production of the polyesters, either one of the dicarboxylic acid component and the aliphatic diol component is used in an stoichiometrically excessive amount in comparison with the amount of the other, and the resultant high molecular weight polyester molecules have terminal groups derived from the functional groups of the component used in the excessive amount or from the functional groups of both the components. In this reference, there is no concrete disclosure of a process for producing the high molecular weight polyoxalate from the dialkyl oxalate and the aliphatic diol and no properties of the resultant product are given. It was confirmed by the inventors of the present invention that the polyoxalate having a satisfactory high molecular weigh was difficult to produce only by varying the ratio, in amount, of the dialkyl oxalate to the aliphatic diol to be reacted with the dialkyl oxalate.

Japanese Unexamined Patent Publication No. 9-316181 (patent reference 4) discloses a polyethylene oxalate, a shaped article formed therefrom and a process for producing the polyethylene oxalate. This polyethylene oxalate was considered to have a certain high molecular weight. However, this polymer was not a product of a dialkyl oxalate and an aliphatic diol, as starting materials. Namely, this polymer was produced by depolymerizing an ethylene oxalate oligomer and ring-opening polymerizing the resultant cyclic ethylene oxalate monomer. The patent reference 4 states that the polyethylene oxalate exhibit an excellent thermal resistance. However, when the polyethylene oxalate is subjected to a melt-processing process, the resultant shaped article exhibits a low elongation and a high brittleness.

Japanese Unexamined Patent Publication No. 9-59359 (patent reference 5) discloses a polyoxalate produced by using, as starting materials, oxalic acid and glycol and a method of producing the same. This polyoxalate is considered to have a certain high molecular weight. However, this product is not one produced from a dialkyl oxalate and an aliphatic diol, as starting materials. Also in the production of the polyoxalate, the glycol is used in an excessive amount compared to the amount of the oxalic acid, and thus the influence of the carboxyl groups located in the terminals of the molecules is not negligible and thus the resultant polymer is spontaneous decomposable due to the reactivity of the carboxyl groups and is brittle.

It is well known that various synthetic resins, for example, polyolefin resins, are widely employed in a large amount to produce various types of industrial parts and daily commodities. The conventional synthetic resins have excellent performance and a high durability over a long period of time and thus, even after use, keep their form during a long period without degradation thereof. Thus the used materials are collected and burnt or used as a land-reclamation material. The used and non-degraded resin materials polute the environment and affect the ecology. Thus biodegradable polymers which can be decomposed by microbes into carbon dioxide and water, and finally disappear from the environment, are regarded as means capable of solving or reducing the above-mentioned environmental problem.

Among the various types of biodegradable polymers, hard-type polymers, for example, typically poly(lactic acid), have high rigidity and thermal resistance. Therefore, the hard-type polymers have a higher applicability to injection molding than the soft type polymers. However, the hard type biodegradable polymers are disadvantageous in the low elongation and a low impact strength.

To solve the problem on the hard type polymers, there have been made various attempts of blending or copolymerizing a rubber or another plastic polymer with the hard type polymers. However, these attempts were insufficient in improving the above-mentioned properties or caused the biodegradation property of the resultant product to decrease.

The patent reference 4 discloses an injection molded article comprising a polyethylene oxalate and having a melting point of 130°C or more, a flexural strength of 0.01 GPa or more, and a flexural modulus of 1.0 GPa or more. The patent reference 4 merely states that an injection molded article having a high tenacity could be obtained and is quite silent as to elongation and the impact resistance of the molded article which are important parameters of the tenacity and, thus, the tenacity of the molded article could not be quantitatively evaluated. Thus, the polyethylene oxalate injection-molded article could not be evaluated as a product usable as a practical article, in view of both the elongation and the rigidity thereof.

Also, the patent reference 2 discloses that an oligoester of oxalic acid with an aliphatic diol exhibits a certain biodegradability. This oligoester has, however, a low molecular weight and thus is not appropriate for injection molding, and the resultant molded article has a poor mechanical strength and thus is not usable in practice.

Also, it is well known that packaging materials for various articles such as foods, industrial parts and daily commodities need to be transparent so as to allow the goods in the packages can be seen therethrough and to firmly protect the goods in the packages, and thus various synthetic polymer films having a high transparency are widely

used for the packages. For example, polyolefin films, polyamide films and polyvinyl chloride films are used for this purpose. However, these conventional synthetic polymer films are disadvantageous in that they are non-biodegradable and have a gas-barrier property, and these properties cause the natural environment to be poluted by the waste of the synthetic polymer packaging materials.

Thus, a new type of packaging material having a high transparency, a satisfactory biodegradability, a high gas-barrier property and a heat-sealing property are required.

The patent reference 4 (JP-9-316181-A) discloses a biodegradable polyethylene oxalate film. Also, it is reported that a non-oriented amorphous film of the polyethylene oxalate has a high transparency. However, no quantitative measurement result on the transparency is reported in the reference. Further, it is reported that a non-oriented crystalline film of the polyethylene oxalate is semi-transparent. There is no description concerning a uniaxially or biaxially orientated film produced from a non-oriented, amorphous film of the polyethylene oxalate. Therefore, a polyethylene oxalate film having a high transparency and other satisfactory performances cannot be found in the patent reference 4. In this reference, it is described that the polyethylene oxalate is usable as a heat seal material or a gas barrier material. However, this reference includes no report of quantitative measurement results of the gas permeability and the heat seal strength of the polyethylene oxalate film.

The patent reference 2 discloses, as a biodegradable material, an oligoester of oxalic acid with an aliphatic diol. However, this oligoester has a low molecular weight and thus is not appropriate as a film-forming material and the resultant film has a low mechanical strength and cannot be used as a practical film. Also, the polyoxalate exhibits an insufficient mechanical strength when it is employed as a plastic resin in practice, and the rigidity and the elastic modulus of the polyoxalate must be enhanced.

"MIRAI ZAIRYO (Future Materials)", vol. 1, No. 11, 31 (2001) (Non-patent reference 4) discloses that poly (lactic acid) is a prospective biodegradable polymer. However, poly(lactic acid) has a serious problem that the biodegradation rate is very slow. It is known that the biodegradation rate of the poly(lactic acid) can be increased by blending the poly(lactic acid) with another biodegradable polymer, for example, polyhydroxyalkanoate, as reported in "KOGYO ZAIRYO (Industrial Materials), vol. 51, No. 3, 23 (2003) (Non-patent reference 5). The non-patent reference 5 further reports that although the biodegradability of the poly(lactic acid) in active mud can be enhanced by blending with polyhydroxyalkanoate, the blending with the polyhydroxyalkanoate causes the mechanical strength of the blended resin to be reduced significantly.

Thus, it has not yet been possible to provide a blend of a poly(lactic acid) with another biodegradable polymer having an enhanced biodegradability and a satisfactory mechanical strength.

| | |
|---|---|
| Non-patent reference 1 | J. Am. Chem. Soc., 52, 3292 (1930) |
| Non-patent reference 2 | J. Polym. sci., Part A, 2, 2115 (1964) |
| Non-patent reference 3 | J. Polym. Sci., Polym. Chem. Ed., 28, 1361 (1990) |
| Non-patent reference 4 | "MIRAI ZAIRYO (Future materials)", vol. 1, No. 11, 31 (2001) |
| Non-patent reference 5 | "KOGYO ZAIRYO (Industrial Materials)", vol. 51, No. 3, 23 (2003) |
| Patent reference 1 | U.S. Patent No. 2,901,466 |
| Patent reference 2 | Japanese Unexamined Patent Publication No. 2002-145691 |
| Patent reference 3 | Japanese Unexamined Patent Publication No. 8-48756 |
| Patent reference 4 | Japanese Unexamined Patent Publication No. 9-316181 |
| Patent reference 5 | Japanese Unexamined Patent Publication No. 9-59359 |

## DISCLOSURE OF THE INVENTION

An object of the present invention is to provide a polyoxalate resin prepared from a dialkyl oxalate and an aliphatic diol and having practically sufficient melt-processing property and mechanical properties, a shaped article formed therefrom, a polyoxalate resin composition comprising the polyoxalate resin, and a shaped article formed from the polyoxalate resin composition.

The inventors of the present invention have made an extensive research for realizing a polyoxalate having an excellent melt-processing property and satisfactory mechanical properties. As a result, the inventors of the present invention have found that when a dialkyl oxalate and an aliphatic diol are subjected to a polycondensation procedure preferably in a specific molar ratio of the aliphatic diol to the dialkyl oxalate, and preferably while controlling the concentrations of water contained in the starting material(s) in an appropriate range, the resultant polyoxalate resin has a high molecular weight sufficient to impart an industrially sufficient melt-processing property and mechanical strength to the resin. The present invention has completed on the basis of the finding.

The above-mentioned object can be attained by the polyoxalate resin of the present invention.

The polyoxalate resin of the present invention comprises a polymer or polymers represented by the formula (1):

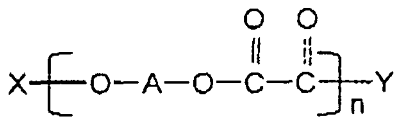

(1)

in which formula (1), A represents a divalent saturated aliphatic hydrocarbon group having 3 to 12 carbon atoms; X represents a hydrogen atom, an R-OCOCO- group or an OHC- group; Y represents, when the X represents the hydrogen atom, a -OR group, a -OAOH group or a -OAOCHO group, or when the X represents the R-OCOCO-group or the OHC-group, a -OR group or a -OAOCHO group; R represents an alkyl group having 1 to 4 carbon atoms; and n represents a positive integer showing the degree of polymerization of the polymer.

The polyoxalate resin as of the present invention preferably comprises a polycondensation reaction product of a dialkyl oxalate represented by the formula (2):

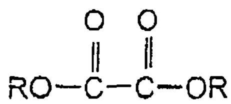

(2)

wherein R is as defined above, with a saturated aliphatic diol represented by the formula (3):

$$HO\text{-}A\text{-}OH \quad (3)$$

wherein A is as defined above, in which polycondensation reaction product, the molar amount of the dialkyl oxalate [M1] and the molar amount of the saturated aliphatic diol [M2] satisfy the relationship (I):

$$0.5 \leqq [M2]/[M1] < 1 \quad (I)$$

and the total content of water in the starting reaction mixture is controlled to less than 2,000 ppm.

In the polyoxalate resin of the present invention, the total content of water in the starting reaction mixture subjected to the polycondensation reaction is preferably controlled within the range from 10 to 2,000 ppm.

In the polyoxalate resin of the present invention, preferably, the concentrations of the terminal -OR, -OCHO and -OH groups represented respectively by [OR], [OCHO] and [OH], satisfy the relationship (II):

$$0.1 \leqq ([OR] + [OCHO])/([OH] + [OR] + [OCHO]) \leqq 1.0 \quad (II).$$

The polyoxalate resin of the present invention preferably has a number average molecular weight of from 20,000 to 100,000, more preferably from 20,000 to 70,000.

In the polyoxalate resin of the present invention, preferably, in the formula (1), R represents a methyl group.

In the polyoxalate resin of the present invention, preferably, in the formula (1), the A group has a branched hydrocarbon structure or a cycloaliphatic hydrocarbon structure.

The polyoxalate resin of the present invention preferably has a tensile modulus of 1 GPa or more and an ultimate elongation of 100% or more.

In the polyoxalate resin of the present invention, the polyoxalate polymer is preferably a poly(cyclohexylenedimethylene oxalate).

The shaped article of the present invention comprises the polyoxalate resin of the present invention as defined above.

The film of the present invention comprises a polyoxalate resin of the present invention as defined above.

The film of the present invention preferably has a haze of 0.4% or less, determined in accordance with ASTM D 1003.

The film of the present invention preferably has an oxygen gas-permeability of 15 ml·mm/$m^2$·day·atm or less

determined in accordance with ASTM D 3985, and water vapor permeability of 3 g·mm/$m^2$·day or less, determined in accordance with JIS K 0208.

The film of the present invention preferably has a heat-seal strength of 12 N/15 mm or more, determined in accordance with JIS K 6854-3.

The film of the present invention preferably has a gloss of 130 or more, determined in accordance with ASTM D 523.

The polyoxalate resin composition of the present invention comprises a polyoxalate resin as defined above and a poly(lactic acid) resin.

In the polyoxalate resin composition of the present invention, the polyoxalate resin preferably has a number average molecular weight of 20,000 to 100,000 and the poly(lactic acid) resin preferably has a number average molecular weight of 20,000 to 500,000.

In the polyoxalate resin composition of the present invention, the poly(lactic acid) resin preferably presents in a content of less than 100 parts by mass per 100 parts by mass of the polyoxalate resin.

In the polyoxalate resin composition of the present invention, the polyoxalate resin preferably presents in a content of 1 to 100 parts by mass per 100 parts by mass of the poly(lactic acid) resin.

The shaped article of the present invention comprises a polyoxalate resin composition as defined above.

The shaped article of the present invention is preferably in the form of a film or sheet or fibers or a molded article.

The polyoxalate resin of the present invention exhibits, for the first time, an industrially sufficient melt-processing or molding property, and the resultant shaped article from the polyoxalate resin of the present invention exhibits a high mechanical strength and a modulus sufficient for practical use. The shaped article includes sheets, films, tubes, fibers, injection-molded articles, and foamed articles.

Also, the polyoxalate resin exhibits biodegradability. The polyoxalate resin composition of the present invention comprising the polyoxalate resin of the present invention blended with a poly(lactic acid) resin exhibits a practically high sufficient biodegradability and can be easily melt-processed into sheets, films, fibers and melt-molded articles which have high mechanical strength and modulus sufficient to practice.

BEST MODE FOR CARRYING OUT THE INVENTION

The polyoxalate resin of the present invention comprises a polymer or polymers represented by the formula (1):

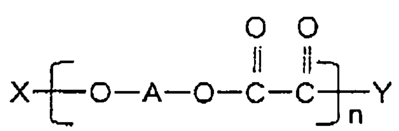

(1)

in which formula (1), A represents a divalent saturated aliphatic hydrocarbon group having 3 to 12 carbon atoms; X represents a hydrogen atom, an R-OCOCO- group or an OHC- group; Y represents, when the X represents the hydrogen atom, a -OR group, a -OAOH group or a -OAOCHO group, or when the X represents the R-OCOCO-group or the OHC-group, a -OR group or a -OAOCHO group; and R represents an alkyl group having 1 to 4 carbon atoms; and n represents a positive integer showing the degree of polymerization of the polymer.

The polyoxalate resin of the present invention can be prepared by a polycondensation reaction of a dialkyl oxalate represented by the formula (2):

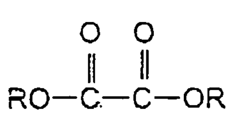

(2)

wherein R is as defined above, with a saturated aliphatic diol represented by the formula (3):

$$HO\text{-}A\text{-}OH \qquad (3)$$

wherein A is as defined above. In this polycondensation reaction procedure, preferably, a molar ratio of the molar

amount of the saturated aliphatic diol [M2] to the molar amount of the dialkyl oxalate [M1] is less than 1 and, more preferably, satisfies the requirement (I):

$$0.5 \leqq [M2]/[M1] < 1 \quad (1)$$

more preferably the requirement (Ia):

$$0.6 \leqq [M2]/[M1] < 1 \quad (Ia)$$

still more preferably the requirement (Ib):

$$0.7 \leqq [M2]/[M1] < 1 \quad (Ib)$$

further preferably the requirement (IC):

$$0.8 \leqq [M2]/[M1] < 1 \quad (Ic)$$

In the polycondensation reaction procedure, when the molar ratio [M2]/[M1] is controlled to a level less than 1, namely the dialkyl oxalate is employed in an excessive molar amount in comparison with the molar amount of the aliphatic diol, the resultant polyoxalate polymer or polymers have a high molecular weight. However, when the dialkyl oxalate is employed in too high a molar amount, the resultant polycondensation reaction mixture contains unreacted dialkyl oxalate in a large amount, and thus a large amount of heat energy is needed to remove the unreacted dialkyl oxalate under a high vacuum from the reaction mixture. Therefore, the molar ratio [M2]/[M1] is preferably not less than 0.5, more preferably not less than 0.6, still more preferably not less than 0.7, further preferably not less than 0.8.

Also, in the polycondensation reaction procedure, preferably the total content of water in the starting reaction mixture, subjected to the polycondensation reaction and containing dialkyl oxalate and the saturated aliphatic diol is controlled to 2,000 ppm or less, more preferably from 10 to 2,000 ppm. when the total content of water is 2,000 ppm or more, the termination of the resultant polymer molecules with formate (-OCHO) groups may be excessively developed and thus the increase in the molecular weight of the polymer may be obstructed. When the total content of water contained in the starting reaction mixture containing dialkyl oxalate and the aliphatic diol is controlled to as mentioned above, the molecular weight of the resultant polymer can be increased.

The polyoxalate resin of the present invention comprises at least one polymer represented by the formula (1). The polyoxalate polymer molecules have, as terminal groups, at least one member selected from alkyl, hydroxyl and formate groups. Namely, the polyoxalate resin of the present invention comprises at least one polymer having a repeating backbone units represented by:

-O-A-O-CO-CO-

and terminal groups X and Y in which X is connected to the ether moiety -O-A- of the backbone units and Y is connected to the carbonyl moiety -CO-.

The terminal groups X and Y are selected from the following groups.

i) When the terminal group X is a hydrogen (H) atom, the other terminal group Y is selected from -OR, -OAOH and -OAOCHO groups.

(ii) when the terminal group X is selected from ROCOCO- and OHC- groups, the other terminal group Y is selected from -OR and -OAOCHO groups.

Also, the polyoxalate polymers from which the polyoxalate resin is constituted has a certain high molecular weight which will be explained hereinafter.

As represented by the general formula (1), the polyoxalate polymer of the present invention has terminal alkoxy (-OR), hydroxyl (-OH) and formate (-OCHO) groups. In the polyoxalate polymer, preferably the concentrations in the units of eq/g of the terminal -OR, -OCHO and -OH groups represented respectively by [OR], [OCHO] and [OH] preferably the requirement (II):

$$0.1 \leqq ([OR] + [OCHO])/([OH] + [OR] + [OCHO]) \leqq 1.0 \quad (II).$$

The ratio ([OR] + [OCHO])/([OH] + [OR] + [OCHO]) is more preferably not less than 0.15 but not more than 1.0. The polyoxalate polymers satisfying the above-mentioned requirement (II) exhibit a satisfactory color tone.

The polyoxalate resin of the present invention preferably has a number average molecular weight ($M_n$) of 25,000 to 100,000, more preferably 25,000 to 80,000, still more preferably 20,000 to 75,000, further preferably 25,000 to 70,000 and thus have an appropriate viscosity when subjected to a melt-processing and enables the resultant shaped article to exhibit a satisfactory mechanical strength. If the $M_n$ is less than 20,000, the resultant shaped polyoxalate resin article may exhibit an unsatisfactory mechanical strength. Also, if the $M_n$ is more than 100,000, the resultant polyoxalate resin may exhibit too high a melt viscosity and thus an insufficient melt-processability. In the formula (1) for the polyoxalate polymer, n represents a positive integer showing the degree of polymerization of the polyoxalate polymer. Preferably, the degree of polymerization n is in the range causing the number average molecular weight of the polyoxalate polymer to be in the range of from 20,000 to 100,000.

The dialkyl oxalate usable as a starting compound for producing the polyoxalate resin of the present invention is preferably selected from dialkyl oxalates as represented by the general formula (2) in which the alkyl groups represented by R and having 1 to 4 carbon atoms, for example, dimethyl oxalate, diethyl oxalate, dipropyl oxalate and dibutyl oxalate. Among the above-mentioned dialkyl oxalates, dimethyl oxalate is more preferably employed for the present invention.

For the purpose of enhancing the thermal resistance of the resultant polyoxalate resin, the dialkyl oxalate may be employed in a combination with an aromatic dicarboxylate, for example, dimethyl terephthalate, or a carbonate, for example, dialkyl carbonate. In this case, the additional ester is preferably employed in an amount of 50 molar % or less, on the basis of the molar amount of the dialkyl oxalate. If the additional ester is employed in too large an amount, the resultant polyoxalate resin may exhibit an unsatisfactory biodegradation property.

The saturated aliphatic diol usable, as a starting compound, for producing the polyoxalate resin of the present invention is preferably selected from the diols as represented by the general formula (3) and having a divalent saturated aliphatic hydrocarbon group A having 3 to 12 carbon atoms. When the group A has two or less carbon atoms the resultant polymer may be easily depolymerized to produce cyclic compound, as by-products, and thus the target polyoxalate polymer having a desired high molecular weight is difficult to prepare, and the resultant polyoxalate resin is hard and brittle, whereas the thermal resistance of the polyoxalate resin is excellent. Also, if the group A has more than 12 carbon atoms, the resultant polyoxalate resin exhibits a high hydrophobicity, a low melting point and a low crystallization temperature and thus is usable only in limited uses. The number of the carbon atoms in the group A may be an even number or an odd number and the group A may have a linear chain structure or a branched chain structure or a cycloaliphatic structure.

The chemical structure of the group A in the saturated aliphatic diol significantly contribute to change melting point and the crystallization temperature of the resultant polyoxalate resin, and thus an appropriate aliphatic diol must be selected in response to the melt-processing conditions for the polyoxalate resin or the temperature at which a resultant shaped article from the polyoxalate resin is used.

The saturated aliphatic diol usable as a starting compound for the production of the polyester resin is selected from, for example, 1,3-propane diol, 1,4-butane diol, 1,5-pentane diol, 1,6-hexane diol, 1,7-heptane diol, 1,8-octane diol, 1,9-nonane diol, 1,10-decane diol, 1,11-undecane diol, 1,12-dodecane diol, neopentyl glycol, trans (or cis) -1,4-cyclohexane dimethanol, 2,4-diethyl-1,5-pentane diol, 3-methyl-1,5-pentane diol, 2-ethyl-2-butyl-1,3-propane diol, 2,2,4-tri-methyl-1,3-propane diol, 2,2-diethyl-1,3-propane diol, and 2-ethyl-1,3-hexane diol. Among the above-mentioned aliphatic diols, preferably, 1,6-hexane diol and trans (or cis) -1,4-cyclohexane dimethanol are used. The above-mentioned diols may be used alone or in a combination of two or more of the diols.

The saturated aliphatic diol is optionally used in a combination of at least one polyhydric alcohol compound (except for the aliphatic diols), for the purpose of improving the melt-processability of the resultant polyoxalate resin or the mechanical properties of a shaped article produced from the polyoxalate resin. The polyhydric alcohol compound usable for the above-mentioned purpose may be selected from glycerol and 1,2,6-hexane triol. The polyhydric alcohol compound is preferably employed in an amount corresponding to 30 molar % or less, more preferably 10 molar % or less, of the amount of the aliphatic diol. If the polyhydric alcohol compound is used in too a large amount, the resultant polycondensation product may be gelled during the polycondensation procedure or during the melt processing procedure of the polycondensation product.

Further, the aliphatic diol may be optionally employed in a combination with an aromatic diol, for the purpose of enhancing the thermal resistance of the resultant polyoxalate. The aromatic diol includes bisphenol A, p-xylyleneglycol and hydroquinone. The aromatic diol must be employed in a limited amount of less than 50 molar % on the basis of the molar amount of the aliphatic diol. If the aromatic diol is used in too large an amount, the resultant polyoxalate resin may have an increased melting point which causes the melt-processing temperature range appropriate to the

resultant polyoxalate resin to become narrow.

An example of the polyoxalate polymer of the formula (1) is a poly(cyclohexylenedimethylene oxalate). This type of the polyoxalate polymer is useful for producing a plastic film having a high transparency.

In the production of the polyoxalate resin of the present invention, the polycondensation reaction procedure of the dialkyl oxalate (preferably dimethyl oxalate) with the aliphatic diol may be carried out by using a batch type reactor or a continuous reactor. Preferably, the polycondensation reaction is effected by a melt polycondensation method. The polycondensation reaction procedure is preferably carried out through (I) a pre-polycondensation step and then (II) a principal polycondensation step.

(1) Pre-polycondensation step

A dialkyl oxalate and a saturated aliphatic diol are charged in a reactor, air in the inside of the reactor is replaced by a nitrogen gas, and then the reaction mixture is gradually heated at a heating rate appropriate to prevent an occurrence of bumping of the reaction mixture while stirring or bubbling the reaction mixture with nitrogen gas. The reaction pressure is usually maintained at the ambient atmospheric pressure. The reaction temperature is preferably controlled so that the final highest temperature is in the range of from 120 to 230°C, more preferably from 130 to 200°C. With the progress of the reaction, a content of an alcohol (for example, methyl alcohol) produced as a by-product in the reaction mixture increases.

In the reaction procedure, the total water content of the starting reaction mixture is preferably controlled to 2000 ppm or less, to obtain the target polyoxalate resin having a high average molecular weight. To control the total water content, preferably, the staring reaction mixture is dried or dehydrated by a conventional method before feeding it into the reactor, the dried or dehydrated reaction mixture is charged in the reactor, and then the reactor is filled by the nitrogen gas. The starting reaction mixture may contain, in addition to dialkyl oxalate and the aliphatic diol, optional additives, for example, an aromatic dicarboxylate and/or a carbonate which may be used in combination with the dialkyl oxalate, a polyhydric alcohol and/or an aromatic diol which may be used in combination with the aliphatic diol and a catalyst.

In the polycondensation reaction procedure, the feed molar ratio [M2]/[M1] of the aliphatic diol to the dialkyl oxalate is preferably controlled to 0.5 or more but less than 1, more preferably 0.6 or more but less than 1, still more preferably 0.7 or more but less than 1, further preferably 0.8 or more but less than 1.

The polycondensation reaction of the dialkyl oxalate and the aliphatic diol is optionally carried out in the presence of a catalyst. The catalyst preferably comprises at least one member selected from compounds of P, Ti, Ge, Zn, Fe, Sn, Mn, Co, Zr, V, Ir, La, Ce, Li, Ca and Hf.

Among the compounds, organic titanium compounds or organic tin compounds are preferably employed. The organic titanium compounds include titanium alkoxides, for example, titanium tetrabutoxide and titanium tetraisopropoxide and distannoxane compounds, for example, 1-hydroxy-3-isothiocyanate-1,1,3,3-tetrabutyl distannoxane, tin acetate, dibutyl tin dilaurate, butyltinhydroxideoxidehydrate, which are highly active as catalysts. There are no specific limits to the amount of the catalyst and the stage at which the catalyst is added to the reaction mixture, as long as the polycondensation reaction is promoted.

(II) Principal polycondensation step

After the reaction temperature of the pre-polycondensation step reached the target level, the pressure of the reactor is gradually reduced, while stirring or bubbling the reaction mixture with a nitrogen gas, at a pressure reduction rate appropriate to prevent an occurrence of a bumping of the reaction mixture. Then the pressure of the reactor is maintained in the range of from 66.5 to 13.3 kPa (500 to 100 mmHg) for a several hours, while distilling off the alcohol generated as a by-product from the reactor. When the by-product alcohol is completely removed from the reactor, the final pressure of the reactor is preferably less than 399 Pa (3.0 mmHg), more preferably 133 Pa (1.0 mmHg) or more but less than 665 Pa (3.0 mmHg), still more preferably 133 to 266 Pa (1.0 to 2.0 mmHg). Also, the reaction temperature is preferably controlled so that the final highest temperature is in the range of from 160 to 300°C, more preferably from 180 to 250°C.

In the production of the polyoxalate resin of the present invention, preferably, the dialkyl oxalate and the aliphatic diol are reacted with each other in the pre-polycondensation step in which the reaction temperature is gradually increased to a final highest temperature of 120 to 230°C, and then in the principal polycondensation step in which the reaction temperature is raised to a final highest temperature of 160 to 300°C and the reaction pressure is gradually reduced to a final lowest pressure of less than 399 Pa (3.0 mmHg), while the by-product alcohol is distilled away from the reaction mixture.

In the production of the polyoxalate resin of the present invention, the polycondensation reaction can be carried out in a conventional reactor. To proceed the polycondensation reaction with a high efficiency while smoothly

evaporating away the alcohol produced as a by-product from the resultant reaction mixture, the reactor is preferably selected from reactors capable of maintaining a gas/liquid contacting surface area in the reactors large by enhancing the renewability of the free surface of the reaction mixture liquid in the reactors. For example, in the case of a vertical type reactor, a flask or reaction vessel equipped with a stirrer is usable as a reactor for the production of the polyoxalate resin of the present invention. The stirrer may be replaced by a bubbling device by which an inert or unreactive gas, for example, a nitrogen gas is blasted, as a bubbling gas, into the reaction mixture liquid in the reactor, to agitate the reaction mixture. Also, in the case of a horizontal type reactor, a kneader having a uniaxial or biaxial agitating wings is preferably used. This type of kneader can make the surface area of the reaction mixture liquid large with a high efficiency. Also, the reactor is preferably selected from those appropriate to high viscosity reactions. The polycondensation reaction is preferably carried out in the presence of a thermal stabilizer, to prevent the thermal degradation of the reaction mixture and the resultant product, if necessary.

The polyoxalate resin of the present invention can be converted to various shaped articles, for example, films, sheets, fibers, nonwoven fabrics, receptacles, vessels, cups, agricultural materials and industrial materials and parts by conventional processing methods, for example, an extrusion, injection molding, press molding, blow molding and vacuum forming. The resultant shaped articles can be subjected to a uniaxial or biaxial drawing procedure. The shaped articles formed from the polyoxalate resin of the present invention exhibit high mechanical performances. Accordingly, the shaped articles and shaping materials prepared from the polyoxalate resin of the present invention can be employed for known various use in which the conventional thermoplastic resins are usable. Also, the polyoxalate resin is usable as a high biodegradable plastic resin in known various uses.

The polyoxalate resin of the present invention can be used alone or in combination with at least one additive or additional polymeric material, to provide a resinous composition which may be in the form of fine particles, chips or beads. The additive usable for the resinous composition containing the polyoxalate resin of the present invention can be selected from, for example, antihydrolytic agents, nucleating agents, pigments, dyestuffs, thermal stabilizer, antidiscoloring agents, antioxidants, ultraviolet absorbers, lubricants, antistatic agents, stabilizers, fillers (talc, clay, montmorillonite, mica, zeolite, xonotlite, calcium carbonate, carbon black, silica powder, alumina powder and titanium dioxide powder), reinforcing materials (glass fibers, carbon fibers, silica fibers and cellulose fibers), flame retardants, plasticizers, waterproofing agents (wax, silicone oils, high alcohols and lanolin). The additive is used in an amount not affecting on the effects of the present invention.

The polymers usable in combination with the polyoxalate resin of the present invention include natural polymeric materials and synthetic polymers. The natural polymeric materials include starch, cellulose, cellulose acetate, chitosan, alginic acid and natural rubbers. The synthetic polymers include, for example, polycaprolactone and copolymers thereof, polylactic acid and copolymers thereof, polyglycolic acid, polysuccinate ester, succinic acid/adipic acid copolyesters, succinic acid/terephthalic acid copolyesters, poly(3-hydroxybutanoic acid), (3-hydroxybutanoic acid/4-hydroxybutanoic acid) copolymers, polyvinyl alcohol, polyethylene, polyethylene terephthalate, polybutylene terephthalate, polyvinyl acetate, polyvinyl chloride, polystylene, polyglutaminate ester, polyester rubbers, polyamide rubbers, styrene-butadiene-stylene block copolymers (SBS), hydrogenated SBS rubbers or elastomers.

In an embodiment (1) of the polyoxalate resin of the present invention, the polyoxalate resin has a tensile modulus of 1 GPa or more, preferably 1.5 GPa or more, still more particularly 1.5 to 5 GPa and an ultimate elongation of 100% or more, preferably 200% or more, still more preferably 200 to 500%. This type of polyoxalate resin is appropriate to injection molding, and the resultant molded article has a high rigidity and a satisfactory impact strength. If the tensile modulus is less than 1 GPa, the resultant injection molded articles may exhibit an unsatisfactory rigidity. Also, if the ultimate elongation is less than 100%, the resultant injection molded articles may exhibit an insufficient impact strength for practical use. The tensile modulus and the ultimate elongation of the molded articles are determined in accordance ASTM D 638.

In this embodiment (1), the polyoxalate resin of the present invention preferably has a number average molecular weight (Mn) of 20,000 to 100,000, more preferably 20,000 to 70,000, still more preferably 25,000 to 70,000. If the Mn is less than 20,000, the resultant injection mold articles may exhibit an unsatisfactory mechanical strength. Also, if the Mn is more than 100,000, the resultant polyoxalate resin may exhibit an insufficient injection moldability and an unsatisfactory biodegradability.

Further, the polyoxalate resin appropriate to the embodiment (1) preferably has a weight average molecular weight (Mw) in the range of from 30,000 to 200,000. Also, the ratio (Mw)/(Mn) of the weight average molecular weight (Mw) to the number average molecular weight (Mn) is preferably in the range of from 1 to 5. The ratio (Mw)/(Mn) represents a distribution of the molecular weight of the resin.

In the embodiment (1) of the present invention, there is no limitation to the injection molding conditions of the polyoxalate resin of the present invention. The cylinder temperature, dwelling pressure, dwelling time, cooling time, and mold temperature for the injection molding of the polyoxalate resin of the present invention are established in consideration of the type of the polyoxalate polymer, the composition of the polyoxalate resin, the size and shape of the target article and the type of the molding machine.

The injection molded articles of the polyoxalate resin of the present invention can be used in various wide fields, for example, parts of electric and electronic devices such as computers, information processing or storage devices, parts of automobiles, office supplies, sport equipments, sporting goods, equipments for leisure, medical instruments, materials for foods, and materials and articles for daily use, and materials and articles for agriculture and gardening.

In an embodiment (2) of the present invention, the polyoxalate resin is formed to a film having a haze of 0.4% or less, determined in accordance with ASTM D 1003. In this embodiment (2), the polyoxalate resin film is preferably formed from the polyoxalate resin usable for the embodiment (1) as mentioned above.

In the embodiment (2), the A group in the general formula (1) is preferably a 1,4-cyclohexylene dimethylene group, derived from 1,4-cyclohexane dimethanol which may be a trans isomer, a cis isomer or a mixture of the trans and cis isomers. The 1,4-cyclohexylene dimethylene groups contained in the polyoxalate polymer of the formula (1) contribute to reducing the crystallization rate of the resultant polymer and to enhancing the transparency, gas barrier property and heat-sealing property of the resultant polyoxalate resin film. Also, this step of the polyoxalate resin film has an appropriate melting point for practical use.

In the embodiment (2) of the present invention, the polyoxalate resin film preferably has a haze of 0.4% or less, more preferably 0.3% or less, still more preferably 0.01 to 0.3%, determined in accordance with ASTM D 1003. If the haze is more than 0.4, the resultant film exhibit an insufficient transparency. Also, the gloss of the film is preferably 130 or more, more preferably 140 to 200. The haze and the gloss is measured by using a polyoxalate resin film having a thickness of 12 μm.

Further, the polyoxalate resin film of the embodiment (2) preferably has an oxygen gas-permeability of 15 $ml{\cdot}mm/m^2{\cdot}day{\cdot}atm$ or less, more preferably 10 $ml{\cdot}mm/m^2{\cdot}day{\cdot}atm$ or less, still more preferably 0.01 to 8 $ml{\cdot}mm/m^2{\cdot}day{\cdot}atm$, determined in accordance with ASTM D 3985, and a water vapor permeability of 3 $g{\cdot}m/m^2{\cdot}day$ or less, more preferably 2 $g{\cdot}ml{\cdot}mm/m^2{\cdot}day$ or less, still more preferably 0.01 to 2 $g{\cdot}mm/m^2{\cdot}day$.

If the oxygen gas permeability is more than 15 $ml{\cdot}mm/m^2{\cdot}day{\cdot}atm$, the resultant polyoxalate resin film may have an unsatisfactory oxygen gas barrier property. Also, if the water vapor permeability is more than 2 $g{\cdot}mm/m^2{\cdot}day$, the resultant polyoxalate resin film may exhibit an insufficient water vapor barrier property. The oxygen gas permeability and the water vapor permeability is measured with a polyoxalate resin film having a thickness of 8.5 to 10.5 μm and, from the resultant data, an oxygen gas permeability and a water vapor permeability of a polyoxalate resin film having a thickness of 1 mm is calculated.

In the embodiment (2), the polyoxalate resin film preferably has a heat-seal strength of 12 N/15 mm or more, more preferably 14 N/15 mm or more, still more preferably 14 to 30 N/15 mm. If the heat-seal strength is less than 12 N/15 mm, the resultant polyoxalate resin film may not be firmly heat-sealed. The heat-seal strength is measured on a specimen prepared by heat-sealing two films each having a thickness of 50 μm with each other.

In the embodiment (2), there is no limitation to the thickness of the polyoxalate resin film as long as the film has a desired mechanical strength, a sufficient flexibility and a haze in the above-mentioned range. Usually, the thickness of the polyoxalate resin film is in the range of from 5 to 300 μm. If the thickness is less than 5 μm, the resultant film may exhibit an insufficient resistance to breakage and pinhole-generation. Also, if the thickness is more than 300 μm, the resultant film may have an unsatisfactory flexibility.

The film of the polyoxalate resin can be produced typically by an inflation method or a T-die film-forming method, and optionally by a calender method or a solvent-casting method. In each method, the film-forming conditions should be established so that the resultant polyoxalate resin film has a sufficient transparency for the use, when the melt film-forming method, namely the inflation method or the T-die method, is utilized, the transparency of the resultant film is significantly influenced by a cooling condition of the polymer melt film, and thus the polymer melt film is preferably cooled at a high cooling rate at which the crystallization of the film is controlled. For example, in the production of a film of a polycyclohexylene dimethylene oxalate prepared from 1,4-cyclohexylene dimethanol and a dialkyl oxalate by the T-die method, the cooling roll temperature is preferably controlled to in the range of from to 30 to 45°C.

The resultant undrawn film having a desired width is drawn by a uniaxial drawing, a successive biaxial drawing or a simultaneous biaxial drawing method, at a temperature equal to or higher than the glass transition temperature and equal to or lower than the crystallization temperature of the polyoxalate resin. The mechanical properties of the polyoxalate resin film can be controlled by controlling the drawing method and the drawing conditions.

The drawing procedure of the undrawn film is preferably carried out at a temperature of 30 to 100°C, more preferably 40 to 80°C, at a draw ratio of 1.5 to 6.0, more preferably 2.5 to 6.0. If the draw ratio is less than 1.5, substantially no effect of the drawing procedure may appear on the resultant drawn film. Also, if the draw ratio is more than 6.0, the resultant film may exhibit a decreased uniformity in physical properties, for example, transparency. The drawn polyoxalate resin film, particualrly a drawn polycyclohexylene dimethylene oxatate film, is optionally heat-set, for example, at a temperature of 120 to 170°C, to stabilize the dimensions of the film.

The polyoxalate resin film of the embodiment (2) of the present invention exhibits excellent transparency, gas barrier property, heat-seal property and biodegradation property, and thus is useful as a lapping film and a packaging

material or packaging container. There is no limitation to the type of package. The polyoxalate resin film can be used as a home lapping film, a pouch including a standing pouch, a skin-pack film, a shrink-packaging film, a pillow type packaging film, socket packaging film, a blister packing film, a deep draw packaging film, a packaging film for a tray or cup, a portion packing film or a strip packaging film.

There is no limitation to the type of articles or materials to be packaged by the polyoxalate resin film of the present invention. The articles and materials include foods, medicines, cosmetics, precision machines and home electric appliances, for example, grains and cereals, for example, wheat flour, rice, rice cake, noodles, convenience noodles; meats and processed meats, for example, edible meats, processed meats, cooked meats and hen's eggs; milk and dairy products, for example, milk, butter and cheese; perishable fishes and processed aquatic products, for example, kneaded meat products and flakes of dried bonito; vegetables and fluits, for example, fresh vegetables, fresh fluits, fluit drinks, and processed (cut) vegetables; confectionaries and breads, for example, sweet stuffs, breads, candy and chocolate; fermentation foods, for example, aquatic fermentation food products, miso, shoyu (soy sauce), pickled vegetables, sake and wine; seasoning matters, for example, mayonnaise, dressings, tomato catsup, drippings, vinegar and edible oils; table luxuries, for example, Japanese tea, coffee, Chinese tea, black tea, refrigerated drinks and spices; cooked foods, for example, retort foods, freezed foods, food boiled down in soy and foods of delicate flavor; daily cooked foods, for example, box lunch and dish, cooked bread, sandwich, konnyaku, (konjak), tofu, boiled rice; medicines, for example, solid preparation , liquid preparation and ointment; cosmetics and toiletries, for example, cosmetics, powdary detergents, dentifrices, shampoos, solid soaps, paper dispers and sanitary napkins; and precision machines and home electric appliances, for example, personal computers, printers, cameras, televisions, refrigerators, portable audio devices, cells, IC chips and optical and/or magnetic recording media.

Also, the polyoxalate resin film of the present invention can be preferably employed as multi-layered films for seed tapes, germination sheets, cure sheets, young tree pot sheets, bird nets, bags for agriculture chemicals, and compost bags for agriculture and gardening; kitchen refuse bags, water-removing bags, shopping bags of supermarkets for home use; and window envelopes and covering films for printing paper sheets for office use.

In an embodiment (3), the polyoxalate resin of the present invention is utilized as a polyoxalate resin composition in combination of a poly(lactic acid) resin. In the composition, the polyoxalate resin preferably has a number average molecular weight (Mn) of 20,000 to 100,000, more preferably 20,000 to 70,000, still more preferably 25,000 to 70,000 and the poly(lactic acid) resin has a number average molecular weight of 20,000 to 500,000 more preferably 50,000 to 200,000. The polyoxalate resin usable for the composition preferably has a weight average molecular weight (Mw) of 30,000 to 200,000, and the ratio (Mw)/(Mn) is preferably in the range of from 1 to 5. Also, in the composition, the poly(lactic acid) resin preferably presents in an amount of less than 100 parts by mass, more preferably less than 100 parts but not less than 1 part, still more preferably 3 to 90 parts, further preferably 5 to 85 parts per 100 parts by mass of the polyoxatate resin.

Also, in the composition, the polyoxalate resin preferably presents in a content of 1 to 100 parts by mass, more preferably 3 to 70 parts, still more preferably 5 to 50 parts per 100 parts by mass of the poly(lactic acid) resin.

If the number average molecular weights of the polyoxalate resin and the poly(lactic acid) resin fall outside of the above-mentioned ranges, the melt viscosities of the polyoxalate resin and the poly(lactic acid) resin may be significantly different from each other and thus the melts of the polyoxalate resin and the poly(lactic acid) resin may be difficult to be uniformly mixed with each other and the resultant resin composition may be unsatisfactory in uniformity thereof.

In the polyoxalate resin composition, the molecules of the polyoxalate polymer optionally contain poly(lactic acid) segments copolymerized with the polyoxalate segments, to enhance the compatibility with the poly(lactic acid) resin. In this case, the content of the poly(lactic acid) segments is limited to 50 molar % or less based on the total molar amount of the polyoxalate resin and the poly(lactic acid) resin.

Also, in the polyoxalate resin composition, the molecules of the poly(lactic acid) polymer optionally contain polyoxalate segments copolymerized with the poly(lactic acid) segments for the same reason as above. In this case, the content of the polyoxalate segments is limited to 50 molar % or less based on the total molar amount of the poly (lactic acid) resin.

The polyoxalate resin composition of the present invention can be used alone or in combination with at least one additive or additional polymeric material. The additive usable for the polyoxalate resin composition of the present invention can be selected from, for example, antihydrolytic agents, nucleating agents, pigments, dyestuffs, thermal stabilizer, antidiscoloring agents, antioxidants, ultraviolet absorbers, lubricants, antistatic agents, stabilizers, fillers (talc, clay, montmorillonite, mica, zeolite, xonotlite, calcium carbonate, carbon black, silica powder, alumina powder and titanium dioxide powder), reinforcing materials (glass fibers, carbon fibers, silica fibers, cellulose fibers), flame retardants, plasticizers, waterproofing agents (wax, silicone oils, high alcohols and lanolin). The additive is used in an amount not affecting on the effects of the composition of the present invention.

The polymers usable in combination with the polyoxalate resin composition of the present invention include natural polymeric materials and synthetic polymers. The natural polymeric materials include starch, cellulose acetate,

cellulose acetate propionate chitosan, alginic acid and natural rubbers. The synthetic polymers include, for example, polycaprolactone and copolymers thereof, polylactic acid and copolymers thereof, polyglycolic acid, polysuccinate ester, succinic acid/adipic acid copolyesters, succinic acid/terephthalic acid copolyesters, poly(3-hydroxybutanoic acid), (3-hydroxybutanoic acid/4-hydroxybutanoic acid) copolymers, polyvinyl alcohol, polyethylene, polyethylene terephthalate, polybutylene terephthalate, polyvinyl acetate, polyvinyl chloride, polystylene, polyglutaminate ester, polyester rubbers, polyamide rubbers, styrene-butadiene-stylene block copolymers (SBS), hydrogenated SBS rubbers or elastomers.

The polyoxalate resin composition of the present invention can be prepared by mixing the polyoxalate resin, the poly(lactic acid) resin and optionally the additive and/or the additional polymer altogether by a conventional mixing procedure. Usually, the mixing procedure is carried out by using a continuous kneading apparatus, for example, a single screw extruder, a twin screw extruder, or a twin rotor kneader or a batch type kneading apparatus, for example, an open roll, kneader, or Banbury mixer. There is no limitation to the kneading conditions for the polyoxalate resin composition. The mixing procedure may be carried out by a solution-blending method using a solvent.

The polyoxalate resin composition of the present invention can be converted to various shaped articles, for example, films, sheets, fibrous articles and another various shaped articles, by conventional shaping methods. The films and sheets can be formed by for example, an extrusion, press molding, and calendering methods. The extruding method includes a T-die method and an inflation method. The resultant shaped articles can be subjected to a uniaxial or biaxial drawing procedure. Also, the resultant films or sheets of the polyoxalate resin composition of the present invention is optionally laminated on another resin sheet, a metal article or a paper sheet.

The another shaped articles include injection molded articles, blow molded articles, thermally formed articles (vacuum-formed articles, compressed pressure-formed articles), foamed articles and press-molded articles. The fibrous articles include monofilaments, multifilament gains, choped fibers and nonwoven fabrics, ropes, nets, felts and woven fabrics.

The shaped articles produced from the polyoxalate resin composition can be used in various wide uses. The polyoxalate resin composition films or sheets can be used for agricultural materials including multi-layered films, for agriculture and gardening seed tapes and bags for agricultural chemicals, bags for food waste (compost bags and kitchen garbage bags), office use materials (coated paper sheets capable of recycling and reuse, lamination films for printed paper sheets, covering films for cards, window envelopes and covering films for printing sheets), packaging materials (packing sheet for paper diapers, laundry bags, and foamed sheets), shrinking films for various articles, bags for retort foods, food-packing films, lapping films), shopping bags and disposable gloves.

Other shaped articles include food-related materials (food trays, food container, food and drink bottles, boxes for perishables and tablewares), articles for daily use (containers for cosmetics, containers for detergents, containers for shampoo, and toiletary goods), agricultural and gardening materials (seedling-cultivating materials, flowerpots and planters), office use materials, sport and leisure goods, medical appliances, electric and electronic device parts, parts of computers and information appliances, parts of automobiles.

The fibrous articles are used for various types of nets (fishing nets, and insert control nets), various types or ropes (agricultural ropes and tree-caltivating ropes), various types of threads (fishing threads and sewing threads, various types of nonwoven articles (disposable paper diapers, sanitary goods), filters and clothings.

## EXAMPLES

The present invention will be further illustrated by the following examples.

In Examples 1 to 5 and Comparative Examples 1 to 3, the tests of the properties, the analysis of the chemical structures and the processings of the products were carried out as mentioned below.

### (1) Water content

The total water contents of the starting reaction mixture (containing a dialkyl oxalate, a saturated aliphatic diol and a catalyst) was measured by a Karl Fischer's coulometric titration method under the following conditions.

> Type of analyzer: Model CA-06, made by Mitsubishi Kaseikogyo K.K.
> Operation: The starting reaction mixture was heated at a temperature of 200°C, the generated water vapor from the mixture was introduced with a dry nitrogen gas stream into a Karl Fisher's reagent solution, to determine the total water content.

(2) Intrinsic viscosity [η] of polyoxalate resin

(i) An Ubbelohde viscometer which was equipped with a liquid container with a capacity of 50 ml and had a water-falling time of 300 seconds between a pair of mark lines at a temperature of 25°C, was placed in a constant temperature water vessel controlled to a temperature of 25±0.1°C. Then, 10 ml of a special high grade of chloroform were charged in the viscometer, and 10 minute after the placement, the falling time $t_0$ in seconds of chloroform between the pair of mark lines was measured.
(ii) Then, 0.16±0.00064g of a polyoxalate resin were completely dissolved in 20 ml of the same grade of chloroform as mentioned above at room temperature to prepare a solution of the polyoxalate resin in a concentration ($C_1$) of 0.800 g/dl. The polyoxalate resin solution in an amount of 10 ml was placed in the Ubbelohde viscometer, and 10 minutes after the placement, the falling time $t_1$ in seconds of the polyoxalate resin solution between the pair of mark lines was measured.
(iii) From the measured $t_0$, $t_1$ and $C_1$ values, the reduced viscosity of the polyoxalate resin solution ($\eta_{SP1}/C_1$ dl/g) was calculated in accordance with the following equation:

$$\eta_{SP1}/C_1 = [(t_1 / t_0) - 1]/C_1$$

(iv) The polyoxalate resin solution in chloroform placed in the viscometer was diluted with 10 ml of the same grade of chloroform as mentioned above, then the falling time ($t_2$, in seconds) of the diluted polyoxalate resin solution having a concentration ($C_2$) of 0.400 g/dl between the pair of mark lines was measured.
From the measured $t_0$, $t_2$ and $C_2$ values, the reduced viscosity ($\eta_{SP2}/C_2$ dl/g) of the diluted polyoxalate resin solution was calculated in the same manner as mentioned above.
(v) In the same manner as mentioned above, another diluted polyoxalate resin solutions having concentrations of 0.267 g/dl ($C_3$) and 0.200 g/dl ($C_4$) were prepared, and the falling timers ($t_3$ and $t_4$, in seconds) of these solutions were measured. From the measured $t_{0,}$ $t_3$ and $C_3$ and $t_0$, $t_4$ and $C_4$ values, the reduced viscosities ($\eta_{SP3}/C_3$ and $\eta_{SP4}/C_4$) of the diluted solutions were calculated in the same manner as mentioned above.
(vi) The relationship between the measured reduced viscosities ($\eta_{SP1}/C_1$, $\eta_{SP2}/C_2$, $\eta_{SP3}/C_3$ and $\eta_{SP4}/C_4$) and the concentrations of the polyoxylate resin ($C_1$, $C_2$, $C_3$ and $C_4$ is plotted to provide a diagram.
On the diagram, the intrinsic viscosity [η] of the polyoxalate resin was determined in accordance with the equation:

$$[\eta] = (\eta_{SP}/C)_{c \to 0},$$

by an extrapolation method in which the intrinsic viscosity corresponding to a concentration of zero is determined.

(3) Number average molecular weight (Mn)

A $^1$H-NMR spectrum of a polyoxalate resin was measured under the following conditions.

Spectrometer: Model JNM-EX400WB, made by NIPPON DENSHI K.K.
Medium: $CDCl_3$
Integration culculations: 32 times
Concentration of resin: 5% by mass.

Equation for calculation

(In the case where dimethyl oxalate was employed as a starting dialkyl oxalate)

$$Mn = np \times Mp + n(OH) \times \{M(OL) - 17\} + n(OCHO) \times 45.02 + n(OCH_3) \times 103.06$$

wherein:

(1) $np = Np/\{\{N(OH) + N(OCHO) + N(OCH_3)\}/2\}$,
(2) $n(OH) = N(OH)/\{\{N(OH) + N(OCHO) + N(OCH_3)\}/2\}$,
(3) $n(OCHO) = N(OCHO)/\{\{N(OH) + N(OCHO) + N(OCH_3)\} /2\}$,
(4) $n(OCH_3) = N(OCH_3)/\{\{N(OH) + N(OCHO) + N(OCH_3)\} /2\}$,
(5) $Np = \{Sp/sp - 1\}/sp$,
(6) $N(OH) = S(OH)/s(OH)$,
(7) $N(OCHO) = S(OCHO)/s(OCHO)$ and
(8) $N(OCH_3) = S(OCH_3)/s(OCH_3)$.

Np represents the total number of the repeating units in the molecular chains shown in the formula (1) except for two terminal repeating units, in the sample of the polyoxalate resin used in the measurement;

np represents the average number of the repeating units in the molecular chain shown in the formula (1), per individual molecule;

Sp represents an integral value of the number of certain hydrogen atoms in the repeating units shown in the formula (1) except for two terminal repeating units, for example, in the case where as an aliphatic diol, 1,4-cyclohexane dimethanol is used, Sp equals an integral value of signals generated due to methylene protons at 3.95 to 4.42 ppm;

sp represents the number of the certain hydrogen atoms counted in the Sp per molecule, for example, in the case of 1,4-cyclohexane dimethanol, sp = 2;

N(OH) represents the total number of the terminal hydroxyl groups in the polyoxalate resin sample;

n(OH) represents an average number of the terminal hydroxyl groups per molecule;

S(OH) represents an integral value of the number of certain hydrogen atoms specifying the terminal hydroxyl groups in the polyoxalate resin sample and, for example, in the case where 1,4-cyclohexane dimethanol is used, the integral value of the number of the signals generated due to the methylene protons at 3.40 to 3.60 ppm;

S(OH) represents an average number of the certain hydrogen atoms counted in the integral value S(OH), per molecule of the polyoxalate resin, for example, in the case of 1,4-cyclohexane dimethanol, the s(OH) is 2;

N(OCHO) represents the total number of the terminal formate groups contained in the polyoxalate resin sample;

n(OCHO) represents the average number of the terminal formate groups per molecule of the polyoxalate resin;

S(OCHO) represents of an integral value of the number of certain hydrogen atoms specifying the terminal formate groups contained in the polyoxalate resin sample, for example, in the case where 1,4-cyclohexane dimethanol is used, the integral value of the number of the signals generated due to the protons at 8.10 ppm;

s(OCHO) represents the number of certain hydrogen atoms counted in the integral value S(OCHO) of the number of the certain hydrogen atoms and, for example, in the case where 1,4-cyclohexane dimethanol is employed, the s (OCHO) is 1;

$N(OCH_3)$ represents the total number of the terminal methoxy groups contained in the polyoxalate resin sample;

$n(OCH_3)$ represents the average number of the terminal methoxy groups per molecule of the polyoxalate resin;

$S(OCH_3)$ represents an integral value of the number of certain hydrogen atoms specifying the terminal methoxy groups contained in the polyoxalate resin sample, for example, in the case where 1,4-cyclohexane dimethanol is used, the integral value of signals generated due to the protons at 3.90 ppm;

$s(OCH_3)$ represents the number of the certain hydrogen atoms counted in the hydrogen atom integral value S $(OCH_3)$, for example, in the case where 1,4-cyclohexane dimethanol is used, the $s(OCH_3)$ is 3;

M(OL) represents the molecular weight of the aliphatic diol from which the groups A are formed in repeating units of the polyoxalate resin molecules; and the Mp represent the molecular weight of the repeating units of the polyoxalate resin molecules.

(4) The terminal group

The terminal groups of the polyoxalate resin molecules are identified by the measurement of the $^1$H-NMR spectrum under the following measurement conditions.

Type of analyzer: Model; JNK-EX-400WB, made by NIPPON DENSHI K.K.
Medium: $CDCl_3$
The number of integration calcuration: 32 times
Concentration of sample: 5% by weight

(5) Measurement of concentration of terminal groups

In the case where dimethyl oxalate is used, the terminal hydroxyl group concentration [OH], the terminal formate group concentration [OCHO] and the terminal methoxy group concentration $[OCH_3]$ are respectively calculated

in accordance with the following equations.

Terminal hydroxyl group concentration [OH]

= n(OH)/Mn

Terminal formate group concentration [OCHO]

= n(OCHO)/Mn

Terminal methoxy group concentration [$OCH_3$]

= n($OCH_3$)/Mn

(6) Processing

The polyoxalate resin was heat press-molded by using a press made by Shinto Kinzokukogyosho. In this procedure, a polyoxalate resin plate was cut into a size of pellets by using a plastic resin cutter, the pellets were placed on a release sheet consisting of polytetrafluoroethylene and having a thickness of 170 μm; pre-heated at a temperature of 210°C for 3 minutes; then pressed under a pressure of 2.9 MPa for one minute; and then immediately cool-pressed at room temperature for 3 minutes.

Example 1

A glass reaction tube having a diameter of about 30 mm and equipped with an air-cooling pipe and a nitrogen gas-bubbling tube was charged with a reaction mixture comprising 12.914g (0.1094 mole) of dimethyl oxalate (which will be referred to as DMO hereinafter), 14.877g (0.1032 mole) of 1,4-cyclohexane dimethanol having a mass ratio of trans-isomer to cis-isomer of 7/3 (which will be referred to as CHDM hereinafter) and 22.7 mg (0.0993 molar % of the molar amount of DMO) of butyl tin hydroxideoxidehydrate. Then air in the inside of the reaction tube was replaced by a nitrogen gas. The reaction mixture in the reaction tube was subjected to the following polycondensation procedure including a pre-polycondensation step and a principal polycondensation step during which the temperature of the reaction mixture was increased and reaction mixture was bubbled with a nitrogen gas introduced thereinto at a flow rate of 50 ml/minute. In the reaction mixture, the molar ratio (M2/M1) of the starting aliphatic diol (M2) to the starting dialkyl oxalate (M1) was 0.943 and the total water content of the starting mixture (DMO, CHDM and the catalyst) was 170 ppm.

(I) Pre-polycondensation step

The reaction tube was placed in an oil bath and heated from room temperature to a temperature of 150°C over one hour, and then to 190°C and maintained at this temperature for one hour to cause the starting compounds to react with each other. The reaction mixture in the reaction tube was become a uniform melt when reached about 150°C. During the temperature-increasing stage, at a temperature of about 80°C, it was found that crystals of DMO adhered to a top part of the reaction tube, this phenonenon is assumed to be generated by sublimation of DMO. Also, it was found that at the temperature of about 100°C or more, methanol was distilled.

(II) Principal polycondensation step

While the temperature of the oil bath is maintained at 190°C, the pressure reduction of the inside of the reaction tube was started.

About one hour after the start of the pressure reduction, the reduced pressure reached 39.9 kPa (300 mmHg), then the pressure was further reduced to 13.3 kPa (100 mmHg) and the reaction was continued under this pressure for further one hour. Then, the oil bath temperature was increased to 210°C and the reaction pressure was gradually reduced for about 10 minutes, to reach 133 Pa (1 mmHg). The reaction was continued at a temperature of 210°C under a pressure of 133 pa (1 mmHg) for 4 hours.

As a result, a poly(cyclohexylenedimethylene oxalate) (which will be referred to as PCHDMOX hereinafter) resin was obtained in an amount of 19.7g, and had the following properties.

$$[\eta] = 0.99 \text{ dl/g},$$

$$Mn = 28400,$$

$$[OH] = 5.06 \times 10^{-5} \text{ eq./g},$$

$$[OCHO] = 1.10 \times 10^{-5} \text{ eq./g},$$

$$[OCH_3] = 0.87 \times 10^{-5} \text{ eq./g, and}$$

$$([OCH_3] + [OCHO])/([OH] + [OCH_3] + [OCHO]) = 0.280.$$

The resultant poly(cyclohexylenedimethylene oxalate) resin could form a tenacious film by a heat press-molding.

Example 2

A polyoxalate resin was prepared by the same procedures as in Example 1 with the following exceptions.

The starting reaction mixture was prepared from 13.642g (0.1155 mole) of DMO, 15.717g (0.1090 mole) of CHDM and 2.4 mg (0.01 molar % of the amount of DMO) of butyltinhydroxideoxidehydrate.

In the principal polycondensation step, the polycondensation under the pressure of 133 Pa (1 mmHg) was carried out for 9 hours.

The ratio M2/M1 was 0.943 and the total water content of the starting reaction mixture was 170 ppm.

The target PCHDMOX was obtained in an amount of 20.3g and had the following properties,

$$[\eta] = 1.47 \text{ dl/g},$$

$$Mn = 45,500,$$

$$[OH] = 3.50 \times 10^{-5} \text{ eq./g},$$

$$[OCHO] = 0.72 \times 10^{-5} \text{ eq./g},$$

$$[OCH_3] = 0.17 \times 10^{-5} \text{ eq./g},$$

$$([OCH_3] + [OCHO])/([OH] + [OCH_3] + [OCHO]) = 0.203.$$

The resultant polyoxalate resin could be formed into a tenacious film by a heat press-molding.

Example 3

A glass reactor having a capacity of 0.5 liter and equipped with a stirrer, a thermometer and a nitrogen gas-feed inlet was charged with a reaction mixture comprising 28.93g (0.2450 mole) of DMO, 32.11g (0.2227 mole) of CHDM and 5 mg (0.01 molar % of the molar amount of DMO) of butyltinhydroxideoxidehydrate, and air in the inside of the reactor was replaced by a nitrogen gas.

The reaction mixture was subjected to a polycondensation procedure comprising a pre-polycondensation step

and a principal polycondensation step. The ratio M2/M1 was 0.909 and the total water content of the reaction mixture was 170 ppm.

(I) Pre-polycondensation step

The temperature of the reaction mixture was increased from room temperature to a temperature of 150°C over one hour. After the reaction mixture was melted, the stirring of the reaction mixture at 25 rpm was started to begin the reaction. During the temperature-increasing and the reaction, a nitrogen gas was introduced into the reactor at a flow rate of 50 ml/minute. In the temperature-increasing, it was found that, at a temperature of about 60°C or more, crystals of DMO (which were assumed to be generated due to sublimation of DMO) adhered on the top part of the reactor, and at a temperature of about 100°C or more, methyl alcohol was distilled. When it reached 150°C, the increase in the temperature of the reaction mixture was immediately started, and about one hour after the start of the temperature increasing, the temperature reached 190°C.

(II) Principal polycondensation step

While the temperature of the reaction mixture in the reactor was maintained at 190°C, a reduction in pressure in the reactor was started so as to reach 39.9 kPa (300 mmHg) over about one hour, while distilling off methyl alcohol. Then the reaction pressure was reduced to 13.3 kPa (100 mmHg) over about one hour. Thereafter, while the reaction temperature was increased to 210°C, the reaction pressure was gradually reduced to reach 133 Pa (1 mmHg) about 15 minutes after the start of the pressure reduction. The reaction of the reaction mixture was continued at a temperature of 210°C under a pressure of 133 Pa (1 mmHg) for 6 hours.

The target PCHDMOX was obtained in an amount of 44.2g and exhibited the following properties.

$$[\eta] = 0.78 \text{ dl/g},$$

$$Mn = 24,500,$$

$$[OH] = 2.00 \times 10^{-5} \text{ eq./g},$$

$$[OCHO] = 0.28 \times 10^{-5} \text{ eq./g},$$

$$[OCH_3] = 5.88 \times 10^{-5} \text{ eq./g},$$

$$([OCH_3) + [OCHO])/([OH] + [OCH_3] + [OCHO]) = 0.755.$$

The polyoxalate resin could be formed into a tenacious film by a heat press-molding.

Example 4

A PCHDMOX resin was prepared by the same procedures as in Example 3, with the following exceptions.

In the reaction mixture, butyltinhydroxideoxidehydrate was employed in an amount of 25 mg (0.05 molar % based on the molar amount of DMO).

In the principal polycondensation step, the polycondensation reaction under a reduced pressure of 133 Pa (1 mmHg) was carried out for 4.5 hours. The ratio M2/M1 and the total water content of the reaction mixture at the start of the reaction were the same as those in Example 3.

The target PCHDMOX was obtained in an amount of 44.0g and had the following properties.

$$[\eta] = 0.99 \text{ dl/g},$$

$$Mn = 28,800,$$

$$[OH] = 2.92 \times 10^{-5} \text{ eq./g},$$

$$[OCHO] = 0.66 \times 10^{-5} \text{ eq./g},$$

$$[OCH_3] = 3.38 \times 10^{-5} \text{ eq./g},$$

$$([OCH_3] + [OCHO])/([OH] + [OCH_3] + [OCHO]) = 0.580.$$

The resultant PCHDMOX resin could be formed into a tenacious film by a heat press-molding.

Example 5

A pressure-resistant reactor having a capacity of 5 liters and equipped with a stirrer, a thermometer a pressure gauge, a nitrogen gas-feed inlet a nitrogen gas-delivery outlet and a polymer-collecting outlet was charged with a reaction mixture comprising 2025.0g (17.148 moles) of DMO, 2312.0g (16.032 moles) of CHDM, 3.6 mg (0.100 molar % of the molar amount of DMO) of butyltinhydroxideoxidehydrate, and 21.6g (5000 ppm based on the total amount of the reaction mixture) of a thermal stabilizer (trademark: Irgaphos (made by Ciba Speciality Chemical Co.) and the air in the inside of the reactor was replaced by nitrogen gas.

The reaction mixture was subjected to a polycondensation procedure comprising a pre-polycondensation step and a principal polycondensation step. The ratio M2/M1 was 0.935 and the water contents of the DMO and CHDM were 478 ppm and 200 ppm, respectively.

(I) Pre-polycondensation step

The temperature of the reaction mixture was increased from room temperature to a temperature of 100°C over 1.25 hours. After a complete melting of the reaction mixture was confirmed, the reaction mixture was heated to 150°C over 2 hours to start the reaction. During the temperature-increasing and the reaction, methyl alcohol was distilled in an amount of 394.5g. The reaction of the reaction mixture was further continued for 2 hours while increasing the reaction temperature to 190°C. The total amount of the distilled methyl alcohol was 434.5g.

(II) Principal polycondensation step

While the temperature of the reaction mixture in the reactor was maintained at 190°C, a reduction in pressure in the reactor was started so as to reach 39.9 kPa (300 mmHg) in about 0.75 hour. Then the reaction pressure was reduced to 13.3 kPa (100 mmHg) in about one hour. During the above-mentioned procedures, methyl alcohol was distilled in a total amount of 484.5g. Then the temperature of the reaction was increased to 207°C in 1.5 hours while gradually reducing the reaction pressure to reach 665 Pa (5 mmHg) in 1.25 hours, and then further reach 106 Pa (0.8 mmHg) in 4 hours, to proceed the reaction of the reaction mixture. Then, the stirring of the reaction mixture was stopped and the resultant product in the state of a melt was withdrawn in the form of a rope through the polymer-collecting outlet, and was cooled with water and then the resultant product was pelletized.

The target PCHDMOX was obtained in an amount of 2430g and exhibited the following properties.

Melting point = 174°C determined by a differencial scanning calorimetry

$$[\eta] = 0.89 \text{ dl/g},$$

$$Mn = 35,100,$$

$$[OH] = 3.19 \times 10^{-5} \text{ eq./g},$$

$$[OCHO] = 0.67 \times 10^{-5} \text{ eq./g},$$

$$[OCH_3] = 1.84 \times 10^{-5} \text{ eq./g},$$

$$([OCH_3] + [OCHO])/([OH] + [OCH_3] + [OCHO]) = 0.440.$$

The polyoxalate resin pellets were fed into a twin screw extruder and mixed at a temperature of 190°C with 1% by mass of an antihydrolytic agent (trademark: Carbodilite LA-1, made by Nisshin Boseki K.K.), 0.1% by mass of another antihydrolytic agent (trademark of: Carboditite HMV-BCA, made by Nisshin Boseki K.K.), 0.32% by mass of a thermal stabilizer (trademark: Irgaphos 168, made by Ciba Speciality Chemicals Co.) and 0.25% by mass of an antioxidant (trademark: Irganox 1010, made by Ciba Speciality Chemicals Co.), each based on the mass of the pellets, and pelletized.
The resultant polyoxalate resin pellets were formed, by a heat press molding, into a sheet having a thickness of 141 μm. In the heat press molding, the resin pellets were pre-heated at 190°C for 3 minutes and pressed under a pressure of 2.9 MPa for 3 minutes and the resultant sheet was rapidly cooled to 20°C.
From the polyoxalate resin sheet, type 2 specimens in accordance with JIS K 7311 were punch-cut. The specimens were subjected to a tensile test under the following conditions.

| | |
|---|---|
| Tester | Tensile testing machine made by Orientic K.K. |
| Specimen | Length of portion of specimen to be stretched: 50 mm Width: 5 mm |
| Tensile speed | 10 mm/minute |
| Test temperature | 23°C |
| Test humidity | 50% RH |

In the test results, the specimens had the following tensile properties.

Tensile strength = 23.5 MPa,
Tensile modulus = 1.44 GPa, and
ultimate elongation = 200%

Also, the polyoxalate resin sheet was subjected to a biodegradation test.
In this test, the polyoxalate resin sheet was cut into pieces having dimensions of 1 cm × 1 cm, the test pieces were filled up with a compost and the compost-covered test pieces were placed in a constant temperature vessel at a temperature of 30°C for 62 days. Then the test pieces were removed from the compost, washed with water and dried. The mass of the tested pieces was measured to determine a mass retention (%) of the polyoxalate resin pieces and to evaluate the biodegradation property thereof.
The mass retention of the tested pieces after 62 days treatment was 78%. The mass retension was calculated in accordance with the following equation.

$$\text{Mass retension (\%)} = W/W_0 \times 100$$

wherein $W_0$ represents a mass of the test pieces before the compost treatment and w represents a mass of the test pieces after the compost treatment.

<u>Example 6</u>

The same pellets of polyoxalate resin of Example 5 were subjected to an injection molding to prepare specimens for testing the tensile properties Izod impact strength, flexural properties and biodegradation property. The injection molding was carried out by using an inline screw type injection molding machine having a mold-clamping force: 300 kN, made by Fanac K.K. under the following conditions.

| | |
|---|---|
| Cylinder temperature | 190 to 200°C |
| Dwelling pressure | 20 MPa |
| Dwelling time | 30 seconds |
| Mold temperature | 35°C |
| Cooling time | 60 seconds |

The tensile properties of the injection molded specimens of the polyoxalate resin was tested in accordance with ASTM D638 under the following conditions.

| | |
|---|---|
| Tester | Tensile testing machine made by Orientic K.K. |
| Specimen | Type No. 1, ASTM |
| Stretching speed | 50 mm/minute |
| Testing temperature | 23°C |
| Testing humidity | 50%RH |

The Izod impact strength of the notched specimens was measured in accordance with ASTM D256 under the following conditions.

| | |
|---|---|
| Tester | Izod impact tester made by Toyo Seiki K.K. |
| Thickness of the specimens | 3 mm |
| Testing temperature | 23°C |
| Testing humidity | 50%RH |

The bending test of the injection molded specimens of the polyoxalate resin was carried out by hand-bending the same specimens as those used for the tensile property test at a temperature of 23°C and at a humidity of 50%RH and observing the results by the naked eye.
An injection molded plates having dimensions of 10 mm × 10 mm × 0.5 mm were subjected to the same biodegradation test as in Example 13, except that the testing temperature was changed to 40°C.
The test results are as follows.

Tensile modulus: 1.8 GPa
Ultimate elongation: More than 130%
Izod impact: The notched specimens were not broken
Bending test: Not broken
Biodegradation property: The mass retension of the tested pieces was 99% after two weeks treatment, and 77% after 8 weeks treatment, and all the tested plates were completely broken after 8 weeks treatment.

Example 7

The same polyoxalate resin pellets as in Example 5 were supplied to a film-forming extruder equipped with a T-die, to prepare a polyoxalate resin film having a thickness of 139 µm. The resultant film was biaxially drawn at an atmospheric temperature of 50°C to provide a drawn film having a thickness of 12 µm.
The film was subjected to the following tests.

(1) Tensile property test

The Young's modulus, tensile strength and ultimate elongation of the polyoxalate resin film was measured in the same testing method as in Example 5, except that the tensile speed was changed to 100 mm/minute.

(2) Transparency test

The film was subjected to a haze measurement in accordance with ASTM D-1003.
Tester: Digital haze computer made by Suga Shikenki K.K.

(3) Gloss test

The film was subjected to a gloss measurement in accordance with ASTM D-523.
Tester: Digital variable angle glossimeter and SM color computer

(4) Oxygen gas permeation test

The oxygen gas permeation of the polyoxalate resin film was measured in accordance with ASTM D-3985 under the following conditions.

Tester: Model: OX-TRAN2/20-MH made by MOCON
Testing temperature: 23°C
Testing humidity: 65%RH

(5) Water vapor permeation test

The water vapor permeation of the polyoxalate resin film was measured in accordance with JIS K 0208, under the following conditioning.

Testing temperature: 40°C
Testing humidity: 90%RH

(6) Biodegradation test

Film specimens having dimensions of about 10 mm × about 10 mm were subjected to the same biodegradation test as in Example 6.
The test results were as follows.

| | |
|---|---|
| Young's modulus | 3.1 GPa |
| Tensile strength | 101 MPa |
| Ultimate elongation | 70% |
| Haze | 0.25% |
| Gloss | 150 |
| Oxygen gas permeation | 4.8 ml·mm/$m^2$·day·atm |
| Water vapor permeation | 1.6 g·mm/$m^2$·day |
| Biodegradation | The mass retention of the tested pieces was 99% after 2 weeks treatment, 77% after 8 weeks treatment, and the masses were whiten and partly-broken after 2 weeks, broken after 8 weeks |

Example 8

The same polyoxalate resin pellets as in Example 5 were fed to an extruder equipped with a T-die and subjected to the same film-forming procedure as in Example 7, except that the thickness of the resultant non-drawn film was 50 μm.
Specimens of the resultant polyoxalate resin film were subjected to a heat-seal test in accordance with JIS Z 1707, under the following conditions.

| | |
|---|---|
| Heat sealer | Heat seal tester made by Tester Sangyo K.K. |
| Seal pressure | 0.196 MPa (2 kgf/$cm^2$) |
| Seal time | 1 second |
| Releasing | a polytetrafluoroethylene sheet reinforced with a glass cloth and having a thickness of 130 μm was employed. |

The heat seal strength of specimens of the heat sealed polyoxalate resin film was tested in accordance with JIS K 6854-3 under the following conditions:

| | |
|---|---|
| Tester | T-type peeling tester |
| Specimen | 15 mm wide |
| Testing (peeling) speed | 50 mm/minute |
| Testing temperature | 23°C |
| Testing humidity | 50%RH |

The test results are as shown in Table 1.

Table 1

| Sealing temperature (°C) | Heat seal strength (N/15 mm) |
|---|---|
| 160 | 18.2 |
| 170 | 20.0 |
| 180 | 15.2 |

<u>Examples 9 to 12 and Comparative Example 4</u>

In each of Examples 9 to 12 and Comparative Example 4, the same polyoxalate resin pellets as in Example 5 were dry blended with poly(lactic acid) resin pellets having a number average molecular weight of 90,000 and a melting point of 167°C (trademark: Laycea H-100PL, made by Mitsui Kagakukogyo K.K.) in the mass ratio as shown in Table 2, by using a mixing tumbler.

The resultant dry resin blend was connected to a resin composition film having a thickness of 50 μm by the same film forming procedure as in Example 8.

Specimens of the resultant film was subjected to testing for Young's modulus, and tensile strength in the same manner as in Example 7 and the biodegradation in the same manner as in Example 13.

In the biodegradation test, one week after, two weeks after, 4 weeks after and 6 weeks after the start of testing, the changes in mechanical strength and appearance of the specimens were checked by the naked eye and hand and the mass retention of specimens was measured in the same manner as in Example 5.

The results are shown in Table 2.

Table 2

| Item / Example No. | | Composition (% by mass) Poly(lactic acid) resin | Composition (% by mass) Polyoxalate resin | Test results Young's modulus (GPa) | Test results Tensile strength (MPa) | Biodegradation: Changes in mechanical strength and appearance / Mass retention: One week | Two weeks | Four weeks | Six weeks |
|---|---|---|---|---|---|---|---|---|---|
| Example | 9 | 90 | 10 | 2.86 | 56.0 | Degraded | Degraded | Broken | Broken |
| | | | | | | 98% | 95% | 90% | 67% |
| Example | 10 | 80 | 20 | 2.42 | 50.6 | Degraded | Degraded | Broken | Broken |
| | | | | | | 93% | 92% | 90% | 48% |
| Example | 11 | 70 | 30 | 2.16 | 48.7 | Degraded | Degraded | Broken | Broken |
| | | | | | | 92% | 90% | 880% | 37% |
| Example | 12 | 50 | 50 | 2.17 | 35.3 | Degraded | Degraded | Broken | Broken |
| | | | | | | 79% | 75% | 70% | 33% |
| Comparative Example 4 | | 100 | 0 | 3.49 | 55.0 | Whiten | Degraded | Broken | Broken |
| | | | | | | 102% | 101% | 105% | 103% |

Examples 13 to 17

In each of Examples 13 to 17, the same polyoxalate resin pellets as in Example 5 were dry blended with poly (lactic acid) resin pellets having a number average molecular weight of 90,000 and a melting point of 167°C (trademark: Laycea H-100PL, made by Mitsui Kagakukogyo K.K.) in the mass ratio as shown in Table 3, by feeding the polyoxalate resin pellets to a batch type kneader at a temperature of 190°C to plasticize the polyoxalate pellets, and then the poly (lactic acid) resin pellets were mixed into the plasticized polyoxalate resin pellets to melt-blend and mix the two types of resins with each other.

The resultant resin composition was divided into a pellet size by using a plastics cutter. The resin composition pellets was fed into a heat press-molding machine (made by Shinto Kinzokukogyosho), pre-heated to a temperature of 190°C for 3 minutes, heat-pressed under a pressure of 2.9 MPa for 3 minutes, and rapidly cooled to 20°C, to provide a press sheet having an about 190 μm.

The specimens of the resultant resin composition sheet was subjected to the same tensile test as in Example 9.

Also, the specimens of the resultant resin composition sheet were subjected to a biodegradation test by the following procedure.

The resin composition sheet was cut into pieces having dimensions of 1 cm × 2 cm, the cut pieces were placed in a polyethylene net bag and the cut pieces-containing net bag was buried in a compost accumulation containing divided vegetables or leaves and fowl droppings. The net bag-containing compost accumulation was placed in a 58°C constant temperature vessel and water-saturated air was blown through the bottom of the accumulation for the period as shown in Table 3.

Thereafter, the net bag was taken up from the compost accumulation and the mechanical strength and appearance of the resin composition pieces were evaluated by the naked eye and hand and the mass-retention of the pieces were measured by the same procedure as in Example 5.

The results are shown in Table 3.

Table 3

| Item / Example No. | | Composition (% by mass): Poly(lactic acid) resin | Composition (% by mass): Polyoxalate resin | Test results: Young's modulus (GPa) | Biodegradation | One week | Two weeks | Four weeks | Six weeks |
|---|---|---|---|---|---|---|---|---|---|
| Example | 13 | 10 | 90 | 1.70 | Changes in mechanical strength and appearance | Broken | Broken | Broken | Broken |
| | | | | | Mass retention | 23% | Unmeasurable | Unmeasurable | Unmeasurable |
| | 14 | 20 | 80 | 1.95 | Changes in mechanical strength and appearance | Broken | Broken | Broken | Broken |
| | | | | | Mass retention | 32% | Unmeasurable | Unmeasurable | Unmeasurable |
| | 15 | 30 | 70 | 2.21 | Changes in mechanical strength and appearance | Broken | Broken | Broken | Broken |
| | | | | | Mass retention | 45% | 85% | Unmeasurable | Unmeasurable |
| | 16 | 45 | 55 | 2.59 | Changes in mechanical strength and appearance | Degraded | Broken | Broken | Broken |
| | | | | | Mass retention | 75% | 45% | Unmeasurable | Unmeasurable |
| | 17 | 0 | 100 | 1.44 | Changes in mechanical strength and appearance | Broken | Broken | Broken | Broken |
| | | | | | Mass retention | 10% | Unmeasurable | Unmeasurable | Unmeasurable |

Comparative Example 1

A polyoxalate resin was produced by the same procedures as in Example 1 with the following exceptions.

The starting reaction mixture comprised 11.81g (0.100 mole) of DMO, 14.42g (0.100 mole) of CHDM and 2.1 mg (0.01 molar % based on the molar amount of DMO) of butyltinhydroxideoxidehydrate, at a ratio of M2/M1 of 1.00 and in a total water content of the starting reaction mixture of 170 ppm.

The target PCHDMOX was obtained in an amount of 17g and had the following properties.

$$[\eta] = 0.38 \text{ dl/g},$$

$$Mn = 8{,}600,$$

$$[OH] = 22.1 \times 10^{-5} \text{ eq./g},$$

$$[OCHO] = 0.37 \times 10^{-5} \text{ eq./g},$$

$$[OCH_3] = 0.90 \times 10^{-5} \text{ eq./g},$$

$$([OCH_3] + [OCHO])/([OH] + [OCH_3] + [OCHO]) = 0.054.$$

The resultant PCHDMOX resin was formed into a film by a heat press molding. The resultant film was fragile.

<u>Comparative Example 2</u>

A polyoxalate resin was prepared by the same procedures as in Example 1, except that DMO was employed in an amount of 11.81g (0.100 mole) and CHDM was in an amount of 6.92g (0.048 mole), the ratio M2/M1 was 0.480 and the total water content of the starting reaction mixture was 121 ppm.

The target PCHDMX resin was obtained in an amount of 8.5g. when the PCHDMX resin was formed into a film by a heat press molding, the resultant film was fragile.

<u>Comparative Example 3</u>

A polyoxalate resin was produced by the same procedures as in Example 1 with the following exceptions.

The starting reaction mixture comprised 11.825g (0.1002 mole) of DMO, 13.061g (0.0907 mole) of CHDM and butyltinhydroxideoxidehydrate, in an amount of 0.01 molar % based on the molar amount of DMO, at a ratio of $M_2/M_1$ of 0.905 and in a total water content of the starting reaction mixture of 2100 ppm.

The target PCHDMOX was obtained in an amount of 21g and had the following properties.

$$[\eta] = 0.29 \text{ dl/g},$$

$$Mn = 4{,}800,$$

$$[OH] = 15.2 \times 10^{-5} \text{ eq./g},$$

$$[OCHO] = 24.8 \times 10^{-5} \text{ eq./g},$$

$$[OCH_3] = 1.85 \times 10^{-5} \text{ eq./g},$$

$$([OCH_3] + [OCHO])/([OH] + [OCH_3] + [OCHO]) = 0.637.$$

The resultant PCHDMOX resin was formed into a film by a heat press molding. The resultant film was fragile.

INDUSTRIAL APPLICABILITY OF THE INVENTION

The polyoxalate resin of the present invention can be easily shaped by a conventional melt processing methods into a sheet, a film, a tube, fibers, an injection molded article or a foamed articles and thus can be utilized in various industrial practices.

Also, the polyoxalate resin of the present invention exhibits a high biodegradability and can be widely employed for biodegradable articles.

## Claims

1. A polyoxalate resin comprising a polymer or polymers represented by the formula (1);

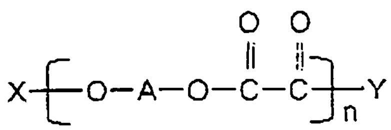

(1)

in which formula (1), A represents a divalent saturated aliphatic hydrocarbon group having 3 to 12 carbon atoms; X represents a hydrogen atom, an R-OCOCO- group or an OHC- group; Y represents, when the X represents the hydrogen atom, a -OR group, a -OAOH group or a -OAOCHO group, or when the X represents the R-OCOCO-group or the OHC-group, a -OR group or a -OAOCHO group; R represents an alkyl group having 1 to 4 carbon atoms; and n represents a positive integer showing the degree of polymerization of the polymer.

2. The polyoxalate resin as claimed in claim 1, comprising a polycondensation reaction product of a dialkyl oxalate represented by the formula (2):

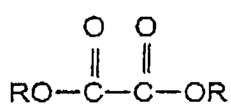

(2)

wherein R is as defined above, with a saturated aliphatic diol represented by the formula (3):

$$HO\text{-}A\text{-}OH \qquad (3)$$

wherein A is as defined above, in which polycondensation reaction product, the molar amount of the dialkyl oxalate [M1] and the molar amount of the saturated aliphatic diol [M2) satisfy the relationship (I):

$$0.5 \leqq [M2]/[M1] < \qquad (I)$$

and the total content of water in the starting reaction mixture is controlled to 2,000 ppm or less.

3. The polyoxalate resin as claimed in claim 2, wherein the total content of water in the starting reaction mixture subjected to the polycondensation reaction is controlled within the range from 10 to 2,000 ppm.

4. The polyoxalate resin as claimed in claim 1, wherein the concentrations of the terminal -OR, -OCHO and -OH groups represented respectively by [OR], [OCHO] and [OH], satisfy the relationship (II):

$$0.1 \leqq ([OR] + [OCHO])/([OH] + [OR] + [OCHO]) \leqq 1.0 \qquad (II).$$

**5.** The polyoxalate resin as claimed in claim 1, having a number average molecular weight of from 20,000 to 100,000.

**6.** The polyoxalate resin as claimed in claim 5, wherein the number average molecular weight of the polyoxalate resin is 20,000 to 70,000.

**7.** The polyoxalate resin as claimed in claim 1, wherein in the formula (1), R represents a methyl group.

**8.** The polyoxalate resin as claimed in claim 1, wherein in the formula (1), the A group has a branched hydrocarbon structure or a cycloaliphatic hydrocarbon structure.

**9.** The polyoxalate resin as claimed in claim 1, having a tensile modulus of 1 GPa or more and an ultimate elongation of 100% or more.

**10.** The polyoxalate resin as claimed in claim 1, wherein the polyoxalate polymer is a poly(cyclohexylenedimethylene oxalate).

**11.** A shaped article comprising a polyoxalate resin as claimed in any one of claims 1 to 10.

**12.** A film comprising a polyoxalate resin as claimed in any one of claims 1 to 10.

**13.** The film as claimed in claim 12, having a haze of 0.4%, or less, as determined in accordance with ASTM D 1003.

**14.** The film as claimed in claim 12, having an oxygen gas-permeability of 15 $ml \cdot mm/m^2 \cdot day \cdot atm$ or less determined in accordance with ASTM D 3985, and water vapor permeability of 3 $g \cdot mm/m^2 \cdot day$, or less, as determined in accordance with JIS K 0208.

**15.** The film as claimed in claim 12, having a heat-seal strength of 12 N/15 mm or more, determined in accordance with JIS K 6854-3.

**16.** The film as claimed in claim 12, having a gloss of 130 or more, determined in accordance with ASTM D 523.

**17.** A polyoxalate resin composition comprising a polyoxalate resin as claimed in any one of claims 1 to 10 and a poly (lactic acid) resin.

**18.** The polyoxalate resin composition as claimed in claim 17, wherein the polyoxalate resin has a number average molecular weight of 20,000 to 100,000 and the poly(lactic acid) resin has a number average molecular weight of 20,000 to 500,000.

**19.** The polyoxalate resin composition as claimed in claim 17, wherein the poly(lactic acid) resin is present in a content of less than 100 parts by mass, per 100 parts by mass of the polyoxalate resin.

**20.** The polyoxalate resin composition as claimed in claim 17, wherein the polyoxalate resin presents in a content of 1 to 100 parts by mass per 100 parts by mass of the poly(lactic acid) resin.

**21.** A shaped article comprising a polyoxalate resin composition as claimed in any one of claims 17 to 20.

**22.** The shaped article, as claimed in claim 21, in the form of a film or sheet or fibers or a molded article.

European Patent Office

# EUROPEAN SEARCH REPORT

Application Number
EP 04 01 7930

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 205 399 A (JAMIOLKOWSKI DENNIS D ET AL) 3 June 1980 (1980-06-03)<br>* claims 1-7 *<br>----- | 1,4-7 | C08G63/16<br>C08G63/199<br>C08L67/02 |
| X | US 4 140 678 A (DAMIOLKOWSKI DENNIS D ET AL) 20 February 1979 (1979-02-20)<br>* claims 1-7 *<br>----- | 1,4-7 | |
| X | EP 0 821 036 A (MITSUI TOATSU CHEMICALS) 28 January 1998 (1998-01-28)<br>* claims 1-9 *<br>----- | 1,4-8, 17-22 | |

TECHNICAL FIELDS SEARCHED (Int.Cl.7)

C08G
C08L

The present search report has been drawn up for all claims

| Place of search | Date of completion of the search | Examiner |
|---|---|---|
| The Hague | 5 November 2004 | Decocker, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 04 01 7930

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2004

| Patent document cited in search report | Publication date | Patent family member(s) | Publication date |
|---|---|---|---|
| US 4205399 A | 03-06-1980 | US 4140678 A | 20-02-1979 |
| | | CA 1112795 A1 | 17-11-1981 |
| | | DE 2825911 A1 | 21-12-1978 |
| | | FR 2394624 A1 | 12-01-1979 |
| | | GB 1601503 A | 28-10-1981 |
| | | GB 1601504 A | 28-10-1981 |
| US 4140678 A | 20-02-1979 | CA 1112795 A1 | 17-11-1981 |
| | | DE 2825911 A1 | 21-12-1978 |
| | | FR 2394624 A1 | 12-01-1979 |
| | | GB 1601503 A | 28-10-1981 |
| | | GB 1601504 A | 28-10-1981 |
| | | US 4205399 A | 03-06-1980 |
| EP 0821036 A | 28-01-1998 | DE 69722086 D1 | 26-06-2003 |
| | | DE 69722086 T2 | 08-04-2004 |
| | | EP 0821036 A1 | 28-01-1998 |
| | | JP 10087976 A | 07-04-1998 |
| | | US 5916950 A | 29-06-1999 |

EPO FORM P0459

For more details about this annex : see Official Journal of the European Patent Office, No. 12/82